# EUROPEAN PATENT APPLICATION

(11) **EP 4 552 610 A1**
(43) Date of publication of application: **14.05.2025**
(21) Application number: 23914232.6
(22) Date of filing: 29.06.2023
(51) Int. Cl.: A61C 15/04

(54) **SINGLE-FLOSS DENTAL TAPE, DENTAL FLOSS ROLL, AND DENTAL FLOSS PICK**

(30) Priority: 05.01.2023 CN 202320047254 U
(71) Applicant: Celanese Xingda Filaments Co., Ltd, Wuxi, Jiangsu 214183 (CN); Celanese (Shanghai) Chemical Trading Co., Ltd., Shanghai 200131 (CN)
(72) Inventor: FU, Chengjie, Shanghai 201210 (CN); XIA, Jingbing, Wuxi, Jiangsu 214183 (CN)
(74) Representative: Jeck, Jonathan
(86) International application number: PCT/CN2023/103689
(87) International publication number: WO 2024/146092

(57) **Abstract**

The present application discloses a monofilament dental tape (1) comprising: a wavy section (11); wherein the wavy section (11) comprises a plurality of wavy portions (110) arranged in sequence in a width direction of the monofilament dental tape (1); wherein each wavy portion (110) comprises a crest portion and a trough portion. The present application also discloses a floss roll comprising the monofilament dental tape (1) and a floss stick comprising the monofilament dental tape (1).

## Description

### Cross-References to Related Applications

This application claims priority to Chinese patent application No. 202320047254.3, filed with the CNIPA on January 5, 2023, for the invention titled "Monofilament Dental Tapes, Floss Rolls and Floss Sticks," the entire contents of which are incorporated herein by reference.

### Technical Field

The present application relates to the field of dental cleaning tools, and specifically to a monofilament dental tape, a floss roll comprising the monofilament dental tape and a floss stick comprising the monofilament dental tape.

### Background

Monofilament dental tape is a tool used to clean between teeth, which brings out food debris and plaque from the crevices by means of friction and translation. In order to slide smoothly into the crevices, the thickness of the monofilament dental tape should be thin enough. However, too thin a thickness can negatively affect the tensile strength of the monofilament dental tape, making the monofilament dental tape susceptible to breaking when tensioned. In order to effectively scrape away food debris and plaque adhering to the tooth surface, the side of the monofilament dental tape that is in contact with the tooth surface should have a concave-convex structure, however, such a structure will in turn increase the thickness of the monofilament dental tape, making it less likely to slide into the tooth gap.

It is desired to develop a monofilament dental tape that can be easily slid into a tooth gap, has some tensile strength, and has a structure that facilitates effective scraping of food debris and plaque adhering to the tooth surface.

### Summary of the Invention

In order to solve the above technical problems, the present application proposes a monofilament dental tape, the monofilament dental tape comprising: a wavy section; wherein the wavy section comprises a plurality of wavy portions disposed in the width direction of the monofilament dental tape in a sequential manner; wherein each wavy portion comprises a crest portion and a trough portion.

According to an optional embodiment, the monofilament dental tape further comprises a guiding section which is arranged in the width direction of the monofilament dental tape at an edge of the wavy section; wherein the guiding section comprises a connecting portion proximate to the wavy section and a guiding portion distal to the wavy section, wherein the guiding portion has a smoothly extending surface and has a material thickness greater than the connecting portion.

According to an optional embodiment, the monofilament dental tape further comprises two guiding sections arranged at different edges of the wavy sections in the width direction of the monofilament dental tape.

According to an optional embodiment, in the height direction of the monofilament dental tape, the distance between the lowest point of the trough portion and the highest point of the crest portion of each wavy portion is from 40 to 200 µm, preferably from 60 to 170 µm, and more preferably from 80 to 150 µm; and in the width direction of the monofilament dental tape, the width of each wavy portion is from 100 to 800 µm, preferably from 200 to 600 µm, more preferably 250 to 500 µm.

According to an optional embodiment, the material thickness of the wavy sections is the same everywhere in the width direction of the monofilament dental tape; the material thickness of the wavy sections is from 20 to 120 µm, preferably from 30 to 90 µm, more preferably from 40 to 70 µm.

According to an optional embodiment, the material thickness of the wavy sections varies everywhere in the width direction of the monofilament dental tape; the ratio of the maximum value to the minimum value of the material thickness of the wavy sections does not exceed 6:1, preferably not exceeding 2:1; the material thickness of the wavy sections is from 20 to 120 µm, preferably from 30 to 90 µm, more preferably from 40 to 70 µm.

According to an optional embodiment, in the width direction of the monofilament dental tape, the monofilament dental tape has a total width of from 0.8 to 4 mm, preferably from 0.8 to 3.2 mm, more preferably from 1.4 to 2.5 mm.

According to an optional embodiment, in the width direction of the monofilament dental tape, the guiding section has a width of 50 to 550 µm.

According to an optional embodiment, the wavy section comprises from two to twenty-five wavy portions, preferably from five to ten wavy portions; the wavy portion has a cross-sectional shape comprising: a sinusoidal waveform, a circular arc waveform, a polygonal waveform and an irregular waveform.

According to an optional embodiment, the monofilament dental tape further comprises at least one flat portion, wherein each flat portion is arranged between the two wavy portions.

According to an optional embodiment, the material of the monofilament dental tape comprises an elastomer and a soft plastic having a tensile modulus of less than 1 GPa, wherein the elastomer comprises one or more of: a polyamide thermoplastic elastomer, a polyether ester thermoplastic elastomer, a polyolefin thermoplastic elastomer, a thermoplastic polyurethane elastomer and a styrenic block copolymer elastomer; wherein the soft plastic comprises polyolefins and polybutylene succinate.

According to an optional embodiment, the monofilament dental tape comprises a coating applied to the surface thereof; the coating comprising one or more of the following substances: lubricants, strippers, abrasives, whiteners, activators, olfactory stimulants, salivating agents, perceptual stimulants, essential oils, fragrances, antimicrobials and antiviral agents.

The present application also proposes a floss roll comprising the monofilament dental tape.

The present application also proposes a floss stick comprising the monofilament dental tape.

The monofilament dental tape, the floss roll and the floss stick according to the present application have the following technical effects. The wavy sections of the monofilament dental tape enhance its strength along its width, making the monofilament dental tape less susceptible to splitting and longitudinal (i.e., along its length) cracking. The combination of the guiding and wavy sections of the monofilament dental tape results in a uniform and stable sliding resistance of the monofilament dental tape during entry into the gap. In the event of a sudden change in crestal width, the wavy section is flattened by the width-direction tension, so that the width-direction tension is absorbed and there is no sudden release of tension due to a sudden change in crestal width.

### Brief Description of the Drawings

The foregoing and other aspects of the present application will be more fully understood from the foregoing detailed description and in conjunction with the following drawings. It should be noted that the proportions of the accompanying drawings may differ for purposes of clarity, but this will not affect the understanding of the present application.
FIG. 1 is a plan view of a first embodiment of a monofilament dental tape according to the present application.
FIG. 2 is a cross-sectional view of a first embodiment of a monofilament dental tape according to the present application.
FIG. 3 is a plan view of a second embodiment of a monofilament dental tape according to the present application.
FIG. 4 is a cross-sectional view of a second embodiment of a monofilament dental tape according to the present application.
FIG. 5 is a plan view of a third embodiment of a monofilament dental tape according to the present application.
FIG. 6 is a cross-sectional view of a third embodiment of a monofilament dental tape according to the present application.
FIG. 7 is a schematic diagram of various cross-sectional shapes of a wavy portion of a monofilament dental tape according to the present application.
FIG. 8 is a cross-sectional view of a fourth embodiment of a monofilament dental tape according to the present application.

### Detailed Description of the Embodiments

Exemplary embodiments of the present application will be described in greater detail below with reference to the accompanying drawings. Although exemplary embodiments of the present application are shown in the accompanying drawings, it should be understood, however, that the present application may be realized in various forms without being limited by the embodiments set forth herein. Rather, these embodiments are provided to enable a more thorough understanding of the present application and to convey the full scope of the present application to those skilled in the art.

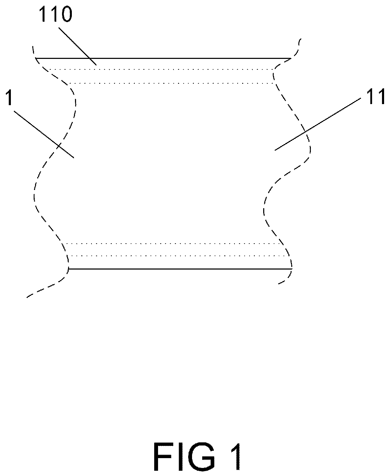

FIG. 1 is a plan view of a monofilament dental tape according to a first embodiment of the present application. For the purposes herein, a major extension direction of the monofilament dental tape 1 is defined as a length direction of the monofilament dental tape 1 (i.e., the left-right direction in FIG. 1), a direction pointing perpendicularly from one side of the monofilament dental tape 1 to the other side is defined as a width direction (i.e., the top-bottom direction in FIG. 1), and a direction that is orthogonal to both the length direction and the width direction is defined as a height direction. As shown in FIG. 1, the monofilament dental tape 1 is in the shape of a ribbon and includes a wavy section 11 having a ratio of length to width greater than 10:1. The wavy section 11 includes a plurality of wavy portions 110 arranged in sequence in the width direction of the monofilament dental tape 1. The wavy section 11 is provided with the purpose of making the monofilament dental tape 1 compressible in the height direction. When the monofilament dental tape 1 enters a tooth gap, the height direction corresponds to the gap width of the tooth gap. Thus, the monofilament dental tape 1 having compressibility in the height direction can locally abut the tooth surfaces on both sides of the gap after entering the gap, while still moving freely in the gap, thereby reducing the sense of stagnation when cleaning the gap. Such a structure balances the cleaning ability and ease of use of the dental tape.

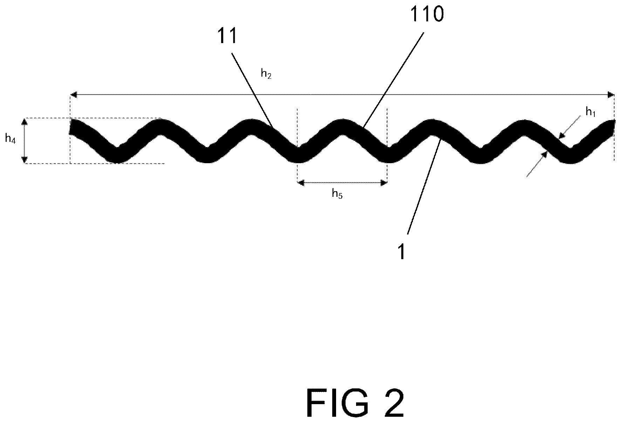

FIG. 2 is a cross-sectional view of a monofilament dental tape according to the present application. As shown in FIG. 2, the material thickness h₁ of the wavy section 11 is 20 to 120 µm, preferably 30 to 90 µm, and more preferably 40 to 70 µm. The total width h₂ (i.e., the extension along the direction of the width of the monofilament dental tape 1) of the monofilament dental tape 1 is 0.8 to 4 mm, preferably 0.8 to 3.2 mm, and more preferably 1.4 to 2.5 mm. Each wavy portion 110 includes a crest portion and a trough portion. Specifically, in the first embodiment, the trough portion of each wavy portion 110 is connected to the trough portion of an adjacent wavy portion 110 or the crest portion of each wavy portion 110 is connected to the crest portion of an adjacent wavy portion 110. However, it will be appreciated by those skilled in the art that the present application also encompasses cases where other portions of each wavy portion 110 are connected to other portions of an adjacent wavy portion 110. The wavy section 11 comprises two to twenty-five wavy portions 110, preferably five to ten wavy portions 110. In the height direction of the monofilament dental tape 1, the distance h₄ between the lowest point of the trough portion of the wavy portion 110 and the highest point of the crest portion of the wavy portion 110 is from 40 to 200 µm, preferably from 60 to 170 µm, more preferably from 80 to 150 µm. In the width direction of the monofilament dental tape 1, the width h₅ of each wavy portion 110 is 100 to 800 µm, preferably 200 to 600 µm, more preferably 250 to 500 µm. The material of the monofilament dental tape 1 comprises an elastomer and a soft plastic having a tensile modulus of less than 1 GPa. The elastomers include polyamide thermoplastic elastomers, polyether ester thermoplastic elastomers, polyolefin thermoplastic elastomers, thermoplastic polyurethane elastomers, and styrene block copolymer elastomers. Soft plastics include polyolefins and polybutylene succinate.

It should be understood that, although not shown in the drawings, the monofilament dental tape 1 according to the present application may comprise a coating applied to a surface thereof. The coating comprises one or more of the following substances: a lubricant, a stripping agent, an abrasive, a whitening agent, an active agent, an olfactory stimulant, a salivary stimulant, a perceptual stimulant, an essential oil, a flavor, an antimicrobial agent and an antiviral agent.

In an example of a first embodiment of the present application, the monofilament dental tape 1 is made of 90 wt% Hytrel^{®} 4068FG (polyether ester thermoplastic elastomer) and 5 wt% Multibase^{™} MB50-010 (polyether ester thermoplastic elastomer-based lubricant masterbatch), and 5 wt% Hytrel^{®} 4068FG-based white colorant masterbatch. The wavy section 11 of the monofilament dental tape 1 has seven wavy portions 110. The wavy portion has a cross-sectional shape of an isosceles triangle and has chamfered contours at the trough and peak portions. The distance between the lowest point of the trough portion and the highest point of the crest portion of the wavy portions 110 is about 140 µm, and the thickness of the material is 55 µm. The total width of the monofilament dental tape 1 is 2.2 mm. The width of each wavy portion 110 is about 320 µm.

The following describes the process by which the monofilament dental tape 1 enters a tooth based on a first embodiment of the present application. As the monofilament dental tape 1 slides over the occlusal surfaces of the teeth, the wavy section 11 of the monofilament dental tape 1 snaps into the opening of the tooth gap, thereby generating feedback to the object pulling the dental tape (e.g., a hand, a roll of floss, or a floss wand). In this way, the user of the monofilament dental tape 1 can clearly sense the position of the monofilament dental tape 1 and thus change the direction of the force applied to the monofilament dental tape 1. After the direction of the force applied to the monofilament dental tape 1 is changed from parallel to the occlusal surfaces of the teeth to perpendicular to the occlusal surfaces of the teeth, the monofilament dental tape 1 reciprocates over the dental openings under the combination of the forces such that the wavy section 11 extends from the dental openings into the teeth. As the monofilament dental tape 1 reciprocates in the direction of the tooth gap, the crest portions of the plurality of wavy portions 110 of the wavy section 11 contact the surface of the tooth gap, causing food debris in the tooth gap and plaque on the surface of the tooth gap to be squeezed into the gaps between neighboring crest portions, and thus be brought out of the tooth gap with the movement of the monofilament dental tape 1.

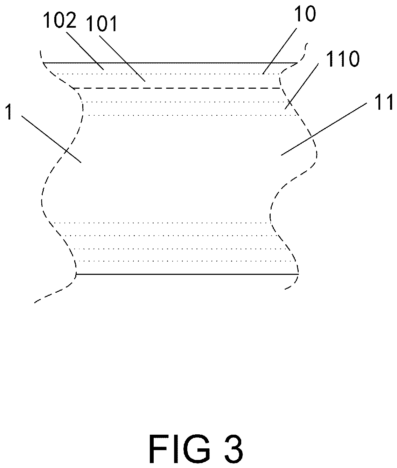

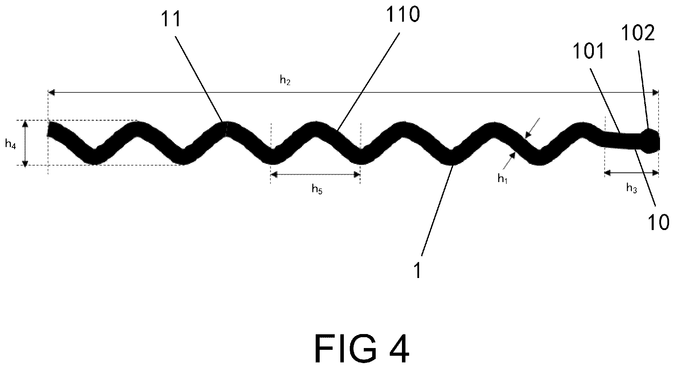

FIG. 3 is a plan view of a second embodiment of a monofilament dental tape according to the present application. FIG. 4 is a cross-sectional view of a second embodiment of a monofilament dental tape according to the present application. Compared to the first embodiment, the monofilament dental tape 1 of the second embodiment of the present application further comprises a guiding section 10 arranged in the width direction of the monofilament dental tape 1 at an edge of the wavy section 11. The guiding section 10 comprises a connecting portion 101 proximate to the wavy section 11 and a guiding portion 102 distal to the wavy section 11. The guiding portion 102 has a smoothly extending surface and has a material thickness greater than the connecting portion 101. In the width direction of the monofilament dental tape 1, the width h₃ of the guiding section 10 may be from 50 to 550 µm. The technical effect of providing the guiding section 10 at the edge of the wavy section 11 is to make it easier for the monofilament dental tape 1 to enter the tooth gap. In the case of applying the same amount of force to the monofilament dental tape 1, the monofilament dental tape 1 equipped with the guiding section 10 can enter the tooth gap faster compared to the monofilament dental tape 1 not equipped with the guiding section 10. This is due to the fact that the first part of the monofilament dental tape 1 to contact the two sides of the tooth gap during entry of the monofilament dental tape 1 is the guiding portion 102 of the guiding section 10, and the guiding portion 102 has a smooth extending surface, which reduces the friction force with the two sides of the tooth gap. friction on both sides of the teeth.

In an example of a second embodiment of the present application, the monofilament dental tape 1 is made of 90 wt% Hytrel^{®} 4068FG, 5 wt% Multibase^{™} MB50-010 and 5 wt% Hytrel^{®} 4068FG-based white masterbatch. The wavy section 11 of the monofilament dental tape 1 has two wavy portions 110. The wavy portion 110 has a cross-sectional shape of an isosceles triangle and has a chamfered contour at the trough portion and the crest portion. The distance between the lowest point of the trough portion and the highest point of the crest portion of the wavy portions 110 is about 140 µm, and the thickness of the material is 55 µm. The total width of the monofilament dental tape 1 is 0.8 mm. The width of each wavy portion 110 is about 320 µm. The width of the guiding section 10 is about 150 µm.

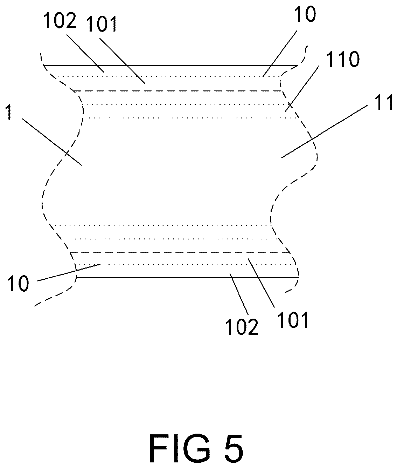

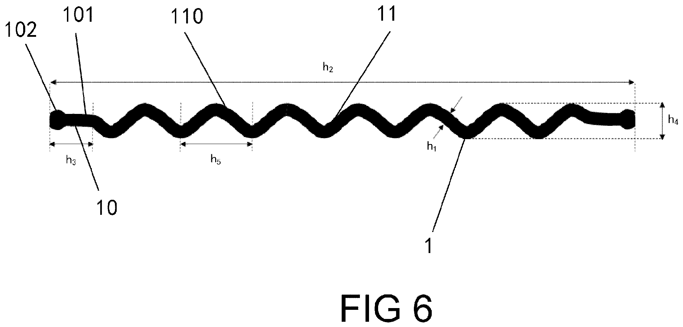

FIG. 5 is a plan view of a third embodiment of a monofilament dental tape according to the present application. FIG. 6 is a cross-sectional view of a third embodiment of a monofilament dental tape according to the present application. In contrast to the second embodiment, the monofilament dental tape 1 of the third embodiment of the present application has two guiding sections 10 arranged in the width direction of the monofilament dental tape 1 at opposite edges of the wavy sections 11. In the width direction of the monofilament dental tape 1, the width h₃ of each of the guiding sections 10 may be from 50 to 550 µm.

In a first example of a third embodiment of the present application, the monofilament dental tape 1 is made of 95 wt% Hytrel^{®} 4068FG and 5 wt% Multibase^{™} MB50-010. The wavy section 11 of the monofilament dental tape 1 has seven wavy portions 110. The wavy portion 110 has a cross-sectional shape of an isosceles triangle and have a chamfered contour at the trough portion and the crest portion. The distance between the lowest point of the trough portion and the highest point of the crest portion of the wavy portion 110 is about 100 µm, and the thickness of the material is 55 µm. The total width of the monofilament dental tape 1 is 3.1 mm. The width of each wavy portion 110 is about 400 µm. The width of each of the guiding sections 10 is about 150 µm.

In a second example of a third embodiment of the present application, the monofilament dental tape 1 is made of 90 wt% Hytrel^{®} 4068FG, 5 wt% Multibase^{™} MB50-010 and 5 wt% Hytrel^{®} 4068FG-based white masterbatch. The wavy section 11 of the monofilament dental tape 1 has seven wavy portions 110. The wavy portion 110 has a cross-sectional shape of an isosceles triangle and has a chamfered contour at the trough portion and the crest portion. The distance between the lowest point of the trough portion and the highest point of the crest portion of the wavy portion 110 is about 140 µm, and the thickness of the material is 55 µm. the total width of the monofilament dental tape 1 is 2.5 mm. The width of each wavy portion 110 is about 320 µm. The width of each of the guiding sections 10 is about 150 µm.

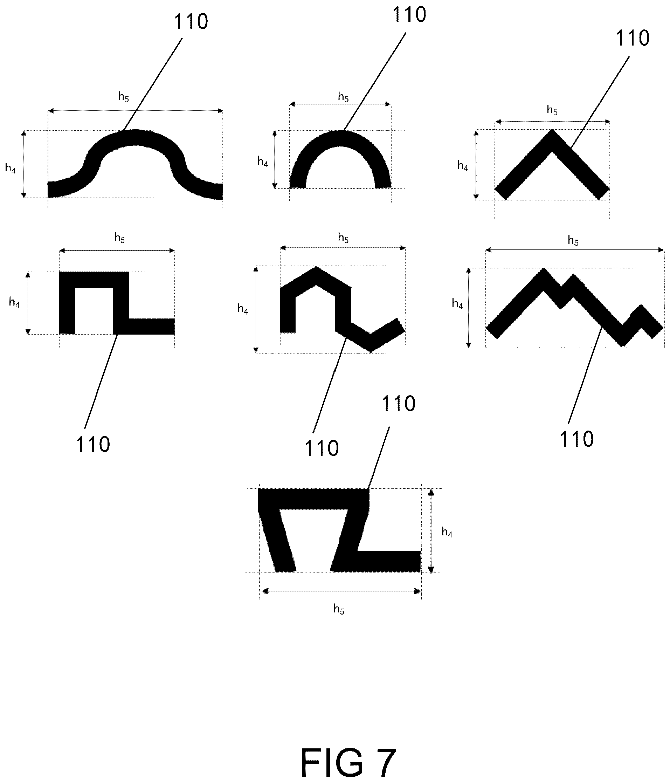

FIG. 7 is a schematic diagram of various cross-sectional shapes of a wavy portion of a monofilament dental tape according to the present application. As shown in FIG. 7, the cross-sectional shapes of the wavy portion 110 may include a sinusoidal waveform, a circular arc waveform, a polygonal waveform, and an irregular waveform.

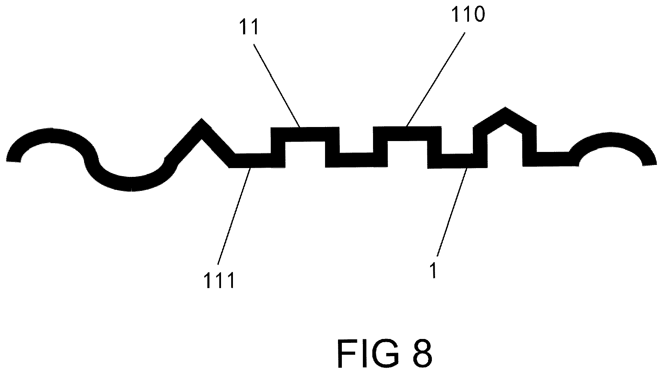

FIG. 8 is a cross-sectional view of a fourth embodiment of a monofilament dental tape according to the present application. In contrast to the first embodiment, the second embodiment and the third embodiment, the monofilament dental tape 1 of the fourth embodiment of the present application further comprises at least one flat portion 111. Each flat portion 111 is arranged between two wavy portions 110, i.e., it is the wavy portion 110 that is adjacent to the flat portion 111 rather than the other flat portion 111. The flat portion 111 is made of a material having substantially the same thickness as the wavy portion 110. Specifically, in the fourth embodiment, the trough portion of each wavy portion 110 may be coupled to the trough portion of an adjacent wavy portion 110 or coupled to the flat portion 111. Alternatively, a crest portion of each wavy portion 110 may also be coupled to the crest portion of an adjacent wavy portion 110 or coupled to the flat portion 111.

The monofilament dental tape 1 according to the present application has the following technical effects. The wavy section 11 of the monofilament dental tape 1 can enhance its strength along the width direction, making the monofilament dental tape 1 less susceptible to splitting and longitudinal (i.e., along the length direction) cracking. The wavy section 11 of the monofilament dental tape 1 may enhance the cleaning efficacy of the dental tape on the surface of the tooth. The combination of the guiding sections 10 and the wavy sections 11 of the monofilament dental tape 1 results in an even and stable sliding resistance of the monofilament dental tape 1 during entry into the tooth gap. In the case of a sudden change in the width of the tooth gap, the wavy section 11 is spread out by the pulling force along the width direction, so that the pulling force along the width direction is absorbed, and the phenomenon of sudden release of the pulling force due to a sudden change in the width of the tooth gap does not occur.

The present application also includes a floss roll comprising a monofilament dental tape 1 and a floss stick comprising a monofilament dental tape 1. Such floss rolls and floss sticks have the same technical effect as the monofilament dental tape 1.

The following describes an experiment for the cleaning effect of a dental tape, comprising the following steps:
Step 1: Using a crayon, apply 20 strokes to the surface of the enamel on the flat area of the canine tooth sample to form a colored strip approximately 1.5 mm wide;
Step 2: Pull the dental tape with the fingers of both hands so that the length of the dental tape left between the fingers of both hands is about 3cm;
Step 3: Scrape the surface of the enamel with the dental tape three times in the direction of the colored strip, using a clean segment of the dental tape each time;
Step 4: Score based on the residue of colored strip, where 5 points are given for colored strip being completely removed and 1 point for not being removed at all.

The above test was repeated three times for each sample enamel to calculate the mean value.

The following describes an experiment for the ability of a dental tape to enter and exit a tooth gap, comprising the following steps:
Step 1: Secure the ends of the dental tape to each arm of the arch-shaped workpiece so that the length of the dental tape between the two fixation points is approximately 4 cm;
Step 2: Attach the tooling to a handheld dynamometer with a range of 100N;
Step 3: Adjust the spacing between the rounded ends of the double-ended spiral micrometer to 30 µm and fix the spiral micrometer on the stage;
Step 4: Holding the force gauge with one hand, apply force vertically downward on the dental tape fixed on the workpiece, so that the dental tape passes through the gap between the two rounded heads of the spiral micrometer, and read the maximum value on the force gauge as the tooth gap entry force;
Step 5: Holding the force gauge with one hand, apply force vertically upward to the dental tape that has passed through the gap, so that the dental tape passes through the gap between the two rounded ends of the spiral micrometer, and read the maximum value on the force gauge as the tooth gap exit force.

Replace the dental tape sample with a new one and repeat the above test six times to calculate the mean values of the entry force and exit force of the dental tape.

Experiments on the monofilament dental tape 1 of the first, second and third embodiments described above and comparisons with other dental tapes in the prior art have been made and the results are shown in the table below.

| Subject of the experiment | Cleaning Power Score | Tooth Gap Entry Force (N) | Tooth Gap Exit Force (N) |
|---|---|---|---|
| Comparison Example 1 | 1.0 | 9.7 | 10.2 |
| Comparison Example 2 | 3.0 | 3.2 | 3.8 |
| Comparison Example 3 | 3.0 | 3.5 | 3.1 |
| First Embodiment | 4.0 | 2.9 | 3.1 |
| Second Embodiment | 4.0 | 1.2 | 1.2 |
| Third Embodiment (1) | 3.3 | 4.7 | 5.1 |
| Third Embodiment (2) | 4.7 | 2.5 | 2.9 |

In the above table, the Comparison Example 1 is the commercially available product Oral B Glide Comfort Plus Floss, made of PTFE.

In the above table, the Comparison Example 2 is made of 95 wt% Hytrel^{®} 4068FG and 5 wt% Multibase^{™} MB50-010. The dental tape has no wavy portion, has a smooth structure in the middle portion along the width direction, and has a material thickness of 60 µm. The total width of the dental tape is 2.1 mm. The width of each guiding section 10 of the dental tape is 150 µm.

In the above table, the Comparison Example 3 are made of 90 wt% Hytrel^{®} 4068FG, 5 wt% Multibase^{™} MB50-010, and 5 wt% Hytrel^{®} 4068FG-based white colorant masterbatch. The dental tape has no wavy portion, a smooth structure in the middle part along the width, and a material thickness of 65 µm. The total width of the dental tape is 2.1 mm. The width of each guiding section 10 of the dental tape is 150 µm.

According to the above table, it can be seen that the monofilament dental tape 1 according to the first embodiment, the second embodiment and the third embodiment of the present application has a relatively high cleaning capacity and a relatively low tooth gap entry force and tooth gap exit force.

The preceding description of the embodiments has been provided for illustrative and descriptive purposes. It is not intended to be exhaustive or to limit the embodiments to the variants described. Many modifications and variations will be apparent to those skilled in the art. These embodiments have been selected and described in order to best elucidate the principles and practical applications so that those skilled in the art will be able to understand the embodiments in terms of their various embodiments as well as the various modifications applicable to their intended use. Within the framework of the embodiments, the components and features described above may be combined between the different embodiments described.

## Claims

1. A monofilament dental tape (1), comprising:
a wavy section (11);
wherein the wavy section (11) comprises a plurality of wavy portions (110) arranged in sequence in the width direction of the monofilament dental tape (1);
wherein each wavy portion (110) comprises a crest portion and a trough portion.

2. The monofilament dental tape (1) according to claim 1, wherein
the monofilament dental tape (1) further comprises guiding sections (10) arranged in the width direction of the monofilament dental tape (1) at the edges of the wavy sections (11);
wherein the guiding section (10) comprises a connecting portion (101) proximate to the wavy section (11) and a guiding section (102) away from the wavy section (11), the
wherein the guiding portion (102) has a smooth extending surface and has a material thickness greater than the connection portion (101).

3. The monofilament dental tape (1) according to claim 2, wherein
the monofilament dental tape (1) further comprises two guiding sections (10) arranged in the width direction of the monofilament dental tape (1) at different edges of the wavy sections (11).

4. The monofilament dental tape (1) according to claim 1, wherein
in the height direction of the monofilament dental tape (1), the distance between the lowest point of the trough portion and the highest point of the crest portion of each wavy portion (110) is from 40 to 200 µm, preferably from 60 to 170 µm, more preferably from 80 to 150 µm;
in the width direction of the monofilament dental tape (1), each wavy portion (110) has a width of 100 to 800 µm, preferably 200 to 600 µm, more preferably 250 to 500 µm.

5. The monofilament dental tape (1) according to claim 1, wherein
the material thickness of the wavy sections (11) is the same everywhere in the width direction of the monofilament dental tape (1);
the wavy section (11) has a material thickness of 20 to 120 µm, preferably 30 to 90 µm, more preferably 40 to 70 µm.

6. The monofilament dental tape (1) according to claim 1, wherein
the thickness of the material of the wavy sections (11) varies everywhere in the width direction of the monofilament dental tape (1);
the ratio of the maximum value to the minimum value of the material thickness of the wavy section (11) does not exceed 6:1, preferably not exceeding 2:1;
the wavy section (11) has a material thickness of 20 to 120 µm, preferably 30 to 90 µm, more preferably 40 to 70 µm.

7. The monofilament dental tape (1) according to claim 1, wherein
in the width direction of the monofilament dental tape (1), the monofilament dental tape (1) has a total width of 0.8 to 4 mm, preferably 0.8 to 3.2 mm, more preferably 1.4 to 2.5 mm.

8. The monofilament dental tape (1) according to claim 2, wherein
in the width direction of the monofilament dental tape (1), the guiding sections (10) have a width of 50 to 550 µm.

9. The monofilament dental tape (1) according to claim 1, wherein
the wavy section (11) comprises from two to twenty-five wavy portions (110), preferably from five to ten wavy portions (110);
the cross-sectional shape of the wavy portion (110) includes: a sinusoidal waveform, a circular arc waveform, a polygonal waveform and an irregular waveform.

10. The monofilament dental tape (1) according to claim 1, wherein
the monofilament dental tape (1) further comprising at least one flat portion (111), wherein each flat portion (111) is arranged between the two wavy portions (110).

11. The monofilament dental tape (1) according to claim 1, wherein
the material of the monofilament dental tape (1) comprises elastomers and soft plastics with a tensile modulus of less than 1 GPa.
wherein the elastomer comprises one or more of the following substances: a polyamide thermoplastic elastomer, a polyether ester thermoplastic elastomer, a polyolefin thermoplastic elastomer, a thermoplastic polyurethane elastomer, and a styrene block copolymer elastomer;
wherein the soft plastics include polyolefins and polybutylene succinate.

12. The monofilament dental tape (1) according to claim 1, wherein
the monofilament dental tape (1) comprises a coating applied to its surface;
the coating comprises one or more of the following substances: a lubricant, a stripping agent, an abrasive agent, a whitening agent, an active agent, an olfactory stimulant, a salivating agent, a perceptual stimulant, an essential oil, a fragrance, an antimicrobial agent and an antiviral agent.

13. A floss roll comprising a monofilament dental tape (1) according to any one of claims 1 to 12.

14. A floss stick comprising a monofilament dental tape (1) according to any one of claims 1 to 12.
